# EUROPÄISCHE PATENTANMELDUNG

(11) **EP 0 537 494 A1**
(43) Veröffentlichungstag der Anmeldung: **21.04.1993**
(21) Anmeldenummer: 92115923.2
(22) Anmeldetag: 17.09.1992
(51) Int. Cl.: B60T 7/08

(54) **Betätigungseinrichtung für die Handbremse von Kraftfahrzeugen**

(30) Priorität: 15.10.1991 DE 4134052
(71) Anmelder: ED. Scharwächter GmbH & Co.KG., D-42855 Remscheid (DE)
(72) Erfinder: Lenzke, Andreas, W-4322 Sprockhövel 2 (DE)
(74) Vertreter: Schön, Theodor, Patent- und Zivilingenieur

(57) **Zusammenfassung**

Für die Betätigungseinrichtung für die Handbremse von Kraftfahrzeugen, die aus einem an einer ortsfest an der Fahrzeugkarosserie befestigten Tragkonsole (2) schwenkbar gelagerten und entgegen der Last einer Rückstellfeder (9) anziehbaren Handbremshebel (1) und einer mit diesem verbundenen Antriebsübertragungseinrichtung (3) für die Betätigungs- bzw. Stelleinrichtung einer Radbremsanlage sowie einer selbsttätig einrastenden und mittels einer ihrerseits entgegen der Last einer Rückstellfeder längsverschieblich im Handbremshebel geführten Hilfsstange (22) auslösbaren Halte- bzw. Feststelleinrichtung für die jeweils eingestellte Verstellage der Betätigungs-bzw. Stelleinrichtung der Radbremsanlage bestehen, wird vorgeschlagen, daß der Handbremshebel vermittels eines Schlepphebels (4) mit der auf die Radbremsanlage wirkenden Antriebsübertragungseinrichtung (3) gekoppelt ist und daß dem Schlepphebel eine vom Handbremshebel entkoppelte, selbsttätig einrastende Feststelleinrichtung (5) zugeordnet ist.

## Beschreibung

Die Erfindung bezieht sich auf eine Betätigungseinrichtung für die Handbremse von Kraftfahrzeugen, bestehend aus einem an einer ortsfest an der Fahrzeugkarosserie befestigten Tragkonsole schwenkbar gelagerten und entgegen der Last einer Rückstellfeder anziehbaren Handbremshebel und einer mit diesem verbundenen Antriebsübertragungseinrichtung für die Betätigungs-bzw. Stelleinrichtung wenigstens einer Radbremsanlage sowie einer selbsttätig einrastenden und mittels einer ihrerseits entgegen der Last einer Rückstellfeder längsverschieblich im Handbremshebel geführten Hilfsstange auslösbaren Halte- bzw. Feststelleinrichtung für die jeweils eingestellte Verstellage der Betätigungs-bzw. Stelleinrichtung der Radbremsanlage.

Die üblicherweise die Betätigungseinrichtung für eine Feststellbremse eines Fahrzeuges, die sog. Handbremse, bildenden Handbremshebel sind als doppelarmige Hebel ausgebildet um eine feststehende Achse schwenkbar an einer karosseriefesten Tragkonsole oder dergl. Einrichtung gelagert und über ihren dem den Handgriff tragenden Hebelarm gegenüberliegenden Hebelarm mit einer auf wenigstens eine Radbremsanlage wirkenden, durch eine Zugstange oder einen Bowdenzug gebildeten Antriebsübertragungseinrichtung gekoppelt. Die Verriegelung des Handbremshebels in seiner der angezogenen Bremse entsprechenden Stellung erfolgt dabei gewöhnlich mittels einer mit einem karosseriefesten Zahnsegment zusammenwirkenden und vermittels einer innerhalb des Handbremshebels längsverstellbar angeordneten, federbelasteten Hilfsstange ausrückbaren sowie in Einratsrichtung federbelasteten Sperrklinke. Bei solchen Bauarten von Handbremsen bleibt der Handbremshebel bei angezogener Bremsanlage in einer mehr oder minder aufrechten Stellung stehen, bis die Feststellbremse gelöst und der Handbremshebel in seine normale Ruhestellung beigeklappt wird. In manchen Fällen wirkt sich die, wenn auch nicht vollkommen aufrechte Stellung des Handbremshebels auf die anderweitige Nutzung des Fahrzeuges hinderlich aus, was beispielsweise dann der Fall ist, wenn das Fahrzeug mit einem Mittendurchstieg zwischen den beiden Vordersitzen versehen ist, oder wenn die Vordersitze des Fahrzeuges als Drehsitze ausgebildet sind, was insbesondere bei modernen Großlimousinen häufig der Fall ist oder wenn schließlich ein Sportwagen mit einem zwischen Fahrzeugsitz und Fahrertür angeordneten Handbremshebel ausgestatte ist. Um den unter bestimmten Umständen in seiner aufragenden Stellung störend wirkenden Handbremshebel zu beseitigen sind die sog. Stockhandbremsen geschaffen worden, die es erlauben die Betätigungseinrichtung für die Hand-oder Feststellbremse an einer hierfür wesentlich geeigneteren Stelle im Fahrzeug unterzubringen, jedoch sind gerade diese Stockhandbremsen mit einer Reihe von Nachteilen behaftet, ganz abgesehen davon, daß ihre Ausbildung und Unterbringung im Fahrzeug in der Regel einen wesentlich höheren Aufwand als den Aufwand für eine Hebel-Handbremse erfordert.

Der Erfindung liegt daher die Aufgabe zugrunde die Betätigungseinrichtung für die Handbremse von Kraftfahrzeugen derart weiter auszugestalten, daß der Handbremshebel trotz eines geringstmöglichen Herstell-und Montageaufwandes und bei unverändert sicherer Wirkungsweise der Feststellbremse auch bei angezogener Hand-bzw. Feststellbremse in eine beigeklappte Stellung überführt werden kann.

Diese Aufgabe wird erfindungsgemäß dadurch gelöst, daß der Handbremshebel vermittels eines Schlepphebels mit der auf die Radbremsanlage wirkenden Antriebsübertragungseinrichtung gekoppelt ist und daß dem Schlepphebel eine vom Handbremshebel entkoppelte, selbsttätig einrastende Feststelleinrichtung zugeordnet ist. Dadurch wird erreicht, daß die Bremsanlage zwar mittels des Handbremshebels in eine angezogene Haltestellung verbringbar und ferner über die vom Hanbdbremshebel entkoppelte Feststelleinrichtung für den Schelpphebel auch in dieser Stellung gehalten ist, der Handbremshebel aber nach dem Anziehen der Feststellbremse in eine nicht störende Lage beigeklappt werden kann, ohne daß die Feststellbremse gelöst zu werden braucht. Dabei bedingt die zusätzliche Anordnung eines Schlepphebels zum einen keine besondere Erhöhung des Herstellungsaufwandes und, bei geschickter Ausgestaltung auch keine Vergrößerung des für die Unterbringung der Betätigungseinrichtung der Handbremse erforderlichen Einbauraumes.

In bevorzugter Ausgestaltung der Erfindung wird weiter vorgeschlagen, daß der Handbremshebel und der Schlepphebel um eine gemeinsame Achse schwenkbar an der orstfest an der Fahrzeugkarosserie befestigten Tragkonsole angelenkt sind, wobei am Handbremshebel eine gegen die karosseriefeste Tragkonsole abgestützte Rückzugsfeder angreift, um ein selbsttätiges Beiklappen des Handbremshebels zu bewirken.

In einer besonders einfachen und daher bevorzugten Ausführungsform ist dabei weiter vorgesehen, daß der Schlepphebel in lediglich einer Bewegungsrichtung, nämlich der dem Anziehen der Feststellbremse zugeordneten Bewegungsrichtung, vermittels einer Mitnehmereinrichtung mit dem Handbremshebel gekoppelt ist, wobei in der umgekehrten Bewegungsrichtung des Handbremshebels einem den Handbremshebel mit dem Schlepphebel koppelnden Mitnehmer eine durch eine zur Anlenkachse der beiden Hebel konzentrisch gekrümmte Langlochausnehmung im Schlepphebel gebildete Freigangeinrichtung zugeordnet ist und wobei ferner die dem Schlepphbel zugeordnete Feststelleinrichtung durch eine gegen die Last einer Einrückfeder schwenkbar am Schlepphebel gelagerte und mit einem an einem feststehenden Ausleger der an der Karosserie befestigten Tragkonsole angeordneten, zur Anlenkachse der beiden Hebel, Handbrems-und Schlepphebel, konzentrischen Zahnsegment zusammenwirkende, als Kipphebel ausgebildete Sperrklinke gebildet und vermittels der innerhalb des Handbremshebels längsverschieblich angeordneten Hilfsstange auslösbar ist.

In einer besonders bevorzugten Ausgestaltungsform der Erfindung ist dabei weiterhin vorgesehen, daß die dem Handbremshebel zugewandte Stirnseite des Schlepphebels einen zu seiner Anlenkachse konzentrischen Konturverlauf aufweist und die als Kipphebel ausgebildete Sperrklinke insgesamt innerhalb dieses Konturverlaufes angeordnet ist, wobei insbesondere dem freien Hebelarm des die Sperrklinke bildenden Kipphebels eine radial gerichtete Aussparung im Konturverlauf der Stirnseite des Schlepphebels zugeordnet ist, derart, daß die Hilfsstange nur im Bereich dieser Aussparung mit dem freien Hebelarm des insgesamt innerhalb der Kontur des Schlepphebels angeordneten Kipphebels zusammenwirken kann und wobei vorteilhafterweise weiterhin vorgesehen ist, daß die radial gerichtete Aussparung im stirnseitigen Konturverlauf des Schlepphebels an dessen oberem Ende angeordnet ist. Vermittels der mit dem unteren Rand der Aussparung in forschlüssigen Eingriff kommenden Hilfsstange kann durch den Handbremshebel dann auch das Lösen der Feststellbremse bewirkt werden.

Um eine mit einem möglichst geringen Aufwand realisierbare und gleichzeitig auch mit einem geringstmöglichen Bedarf an Einbauraum im Fahrzeug unterzubringende Gestaltung der Betätigungseinrichtung zu erreichen sieht die Erfindung weiterhin vor, daß der Handbremshebekl und der Schlepphebel jeweils ein im wesentlichen U-förmiges Querschnittsprofil aufweisen und einander übergreifend angeordnet sind, wobei der Schlepphebel seinrseits die durch einen Flachmaterialzuschnitt gebildete an der Fahrzeugkaroserie feststehend befestigte Konsole umgreift und daß die Sperrklinke eventuell samt einer ihr zugeordneten als Schenkelfeder ausgebildeten Einrückfeder innerhalb des Profilquerschnittes des Schlepphebels angeordnet und auf einem diesen durchsetzenden Zapfen gelagert ist.

In weiterer Einzelausgestaltung der Erfindung kann schließlich auch noch vorgesehen sein, daß dem Kopf des Lagerbolzens für die Sperrklinke eine zu dessen Anlenkachse konzentrisch gekrümmte sickenförmige seitliche Erweiterung der Anlenkbasis des Handbremshebels zugeordnet und die im Handbremshebel längsverschieblich angeordnete Hilfsstange in an sich bekannter Weise mittels eines Betätigungsknopfes entgegen einer Federlast verstellbar ist und mit der stirnseitigen Aussparung in der Kontur des Schlepphebels in Eingriff bringbar ist, derart, daß sich eine formschlüssige Koppelung des Handbremshebels mit dem Schlepphebel ergibt, vermittels welcher der Schlepphebel durch den Handbremshebel in seine unwirksame ausgangslage zurückgestellt werden kann.

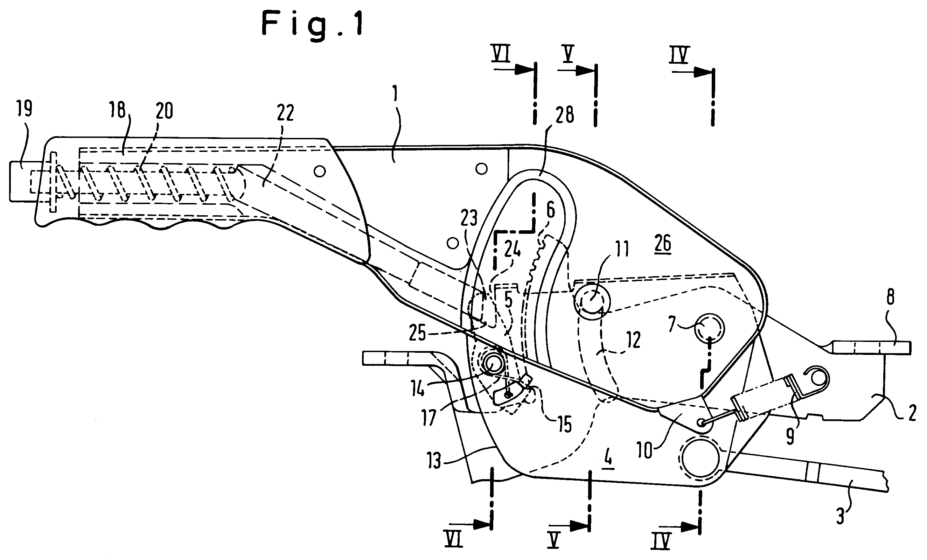

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine Seitenansicht der in ihrer Ruhelage befindlichen Handbremsbetätigungseinrichtung;

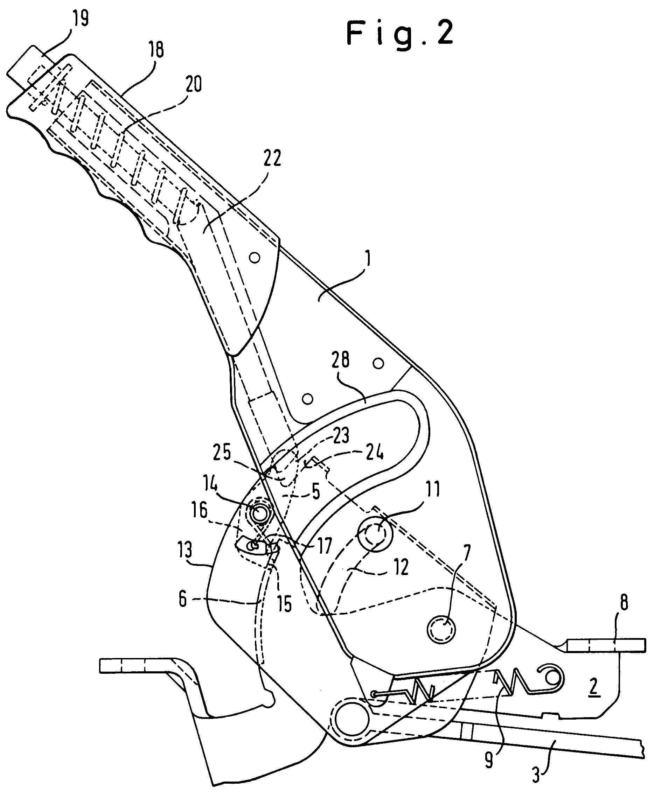

- Figur 2: eine Seitenansicht der in der dem Anziehen der Handbremse entsprechenden Stellung befindlichen Handbremsbetätigungseinrichtung;
- Figur 3: eine Seitenansicht der in der der angezogenen der Handbremse entsprechenden Stellung befindlichen Handbremsbetätigungseinrichtung;
- Figur 4: einen Schnitt durch die Darstellung der Figur 1 entlang der Linie IV-IV in Figur 1;
- Figur 5: einen Schnitt durch die Darstellung der Figur 1 entlang der Linie V-V in Figur 1;
- Figur 6: einen Schnitt durch die Darstellung der Figur 1 entlang der Linie VI-VI in Figur 1.

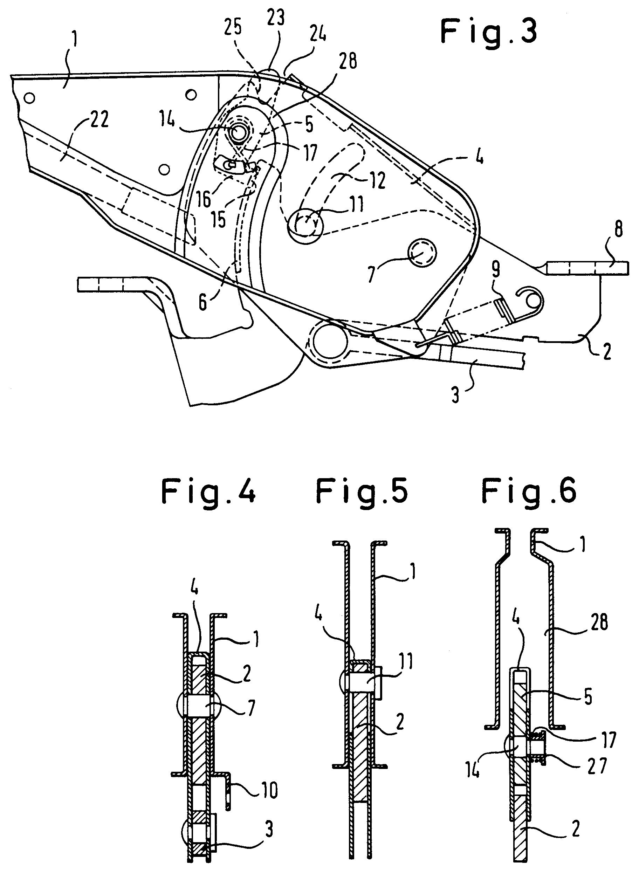

Die in der Zeichnung dargestellte Betätigungseinrichtung für die Hand-oder Feststellbremse eines Kraftfahrzeuges umfaßt im wesentlichen einen Handbremshebel 1, eine diesen schwenkbar lagernde, vermittels nicht näher dargestellter Schraubenbolzen orstfest an der Fahrzeugkareosserie befestigten Tragkonsole 2 sowie einen den Handbremshebel 1 mit einer durch eine Zugstange 3 gebildeten Antriebsübertragungseinrichtung koppelnden Schlepphebel 4 und eine durch eine als Kipphebel ausgebildete Sperrklinke 5 zur Festlegung des in einer Anzugsstellung befindlichen Schlepphebels 4 gegenüber einem mit der Tragkonsole 2 einteilig ausgebildeten Zahnsegmant 6. Der Handbremshebel 1 und der Schlepphebel 4 sind um eine gemeinsame Achse 7 schwenkbar an der im gezeigten Ausführungsbeispiel durch einen mit seitlich abgestellten Befestigungsflanschen 8 versehenen Flachmaterialzuschnitt gebildeten Tragkonsole 2 gelagert. Dem Handbremshebel 1 ist ferner eine gegen die Tragkonsole 2 abgestützte, als Spiralfeder ausgebildete Rückzugsfeder 9 zugeordnet, die an einem Ausleger 10 angreift. Mit dem Schlepphebel 4 ist der Handbremshebel 1 in seiner dem Anziehen der Feststellbremse zugeordneten Bewegungsrichtung vermittels eines Mitnehmers 11 gekoppelt, während dem Handbremshebel 1 in umgekehrter Richtung eine durch eine dem Mitnehmer 11 zugeordnete und zur Anlenkachse 7 konzentrisch gekrümmte Schlitzausnehmung 12 im Schlepphebel 4 gebildete Freigangeinrichtung vorgesehen ist. Der Schlepphebel 4 weist an seiner dem Handbremshebel 1 zugewandten Stirnseite 13 einen zu seiner Anlenkachse 7 konzentrischen Konturbverlauf auf, innerhalb dessen die Sperrklinke 5 um eine Achse 14 schwenkbar an ihm gelagert ist. In seiner der angezogenen Feststellbremse entsprechenden Stellung wird der Schlepphebel 4 vermittels des einen, mit einem Rastzahn 15 versehenen Hebelarmes 16 des die Sperrklinke 5 bildenden Kipphebels gegen das Zahnsegment 6 verriegelt, wobei der Rastzahn 15 vermittels der den Hebelarm 14 beaufschlagenden Feder 17 mit dem Zahnsegment in sicherer Eingriffslage gehalten ist. Dem Lösen der Feststellbremse ist eine vermittels eines den Griff 18 des Handbremshebels 1 überragenden Betätigungsknopfes 19 gegen die Last einer Haltefeder 20 längsverschiebbar im Handbremshebel 1 geführte Hilfsstange 22 zugeordnet, welche mit dem zweiten Hebelarm 23 der als Kipphebel ausgebildeten Sperrklinke 5 zusammenwirkt. Dabei weist der Schlepphebel 4 an seiner dem Handbremshebel 1 zugewandten Stirnseite 13 eine im Bereich seines oberen Endes angeordnete radial zu seiner Anlenkachse 7 hin gerichtete Ausnehmung 24 auf, in welche der Hebelarm 23 der im übrigen völlig innerhalb der Kontur des Schlepphebels 4 angeordneten Sperrklinke 5 hineinragt, derart, daß die Sperrklinke 5 durch die Hilfsstange 22 nur dann auslösbar ist, wenn sich der Handbremshebel 1 in seiner der angezogenen Feststellbremse entsprechenden aufrechten Stellung befindet. Die zum Lösen der Feststellbremse die Sperrkliunke 5 in ihrer Lösestellung haltende Hilfsstange 22 kommt dabei an der Unterkante 25 der Ausnehmung 24 in Anlage, wodurch der Schlepphebel 4 in der dem Lösen der Feststellbremse zugeordneten Bewegungsrichtung des Handbremshebels 1 mit diesem gekoppelt ist, solange die Hilfsstange 22 in ihrer längsverschobenen Betätigungsstellung gehalten wird. Wie insbesondere aus den Darstellungen der Figuren 4 bis 6 ersichtlich ist sind der Basisbereich 26 des Handbremshebels 1 und der Schlepphebel 4 aus U-förmig gebogenen Blechmaterialzuschnitten gebildet und ineinandergreifend angeordnet, wobei der Schlepphebel 4 ferner den aufrechtstehend angeordneten Mittelbereich der aus einem Flachmaterialzuschnitt gebildeten Tragkonsole 2 umgreifend angeordnet ist, so daß sich durch die ineinandergeschachtelte Anordnung der einzelnen Teile eine außerordentlich raumsparende Anordnung bzw. Ausbildung der Hand-oder Feststellbremse insgesamt ergibt. In Verbindung mit dieser ineinandergeschachtelten Anordnung ist dem das Federwiderlager 27 für die die Sperrklinke 5 belastende Feder bildenden Kopfteil des Lagerstiftes 14 eine zu dessen Anlenkachse 7 konzentrisch gekrümmte Ausbauchung 28 im Basisteil des Handbremshebels 1 zugeordnet.

## Patentansprüche

1. Betätigungseinrichtung für die Handbremse von Kraftfahrzeugen, bestehend aus einem an einer ortsfest an der Fahrzeugkarosserie befestigten Tragkonsole schwenkbar gelagerten und entgegen der Last einer Rückstellfeder anziehbaren Handbremshebel und einer mit diesem verbundenen Antriebsübertragungseinrichtung für die Betätigungs-bzw. Stelleinrichtung wenigstens einer Radbremsanlage sowie einer selbsttätig einrastenden und mittels einer ihrerseits entgegen der Last einer Rückstellfeder längsverschieblich im Handbremshebel geführten Hilfsstange auslösbaren Halte- bzw. Feststelleinrichtung für die jeweils eingestellte Verstellage der Betätigungs-bzw. Stelleinrichtung der Radbremsanlage, dadurch gekennzeichnet, daß der Handbremshebel (1) vermittels eines Schlepphebels (4) mit der auf die Radbremsanlage wirkenden Antriebsübertragungseinrichtung (3) gekoppelt ist und daß dem Schlepphebel (4) eine vom Handbremshebel (1) entkoppelte, selbsttätig einrastende Feststelleinrichtung (5) zugeordnet ist.

2. Betätigungseinrichtung nach Anspruch 1, dadurch gekennzeichnet, daß der Handbremshebel (1) und der Schlepphebel (4) um eine gemeinsame Achse (7) schwenkbar an der ortsfest an der Fahrzeugkarosserie befestigten Tragkonsole (2) angelenkt sind.

3. Betätigungsinrichtung nach Anspruch 1 und 2, dadurch gekennzeichnet, daß am Handbremshebel (1) eine gegen die karosseriefeste Tragkonsole (2) abgestützte Rückzugsfeder (9) angreift.

4. Betätigungseinrichtung nach Anspruch 1 bis 3, dadurch gekennzeichnet, daß der Schlepphebel (1) in lediglich einer Bewegungsrichtung vermittels einer Mitnehmereinrichtung (11) mit dem Handbremshebel (1) gekoppelt ist, wobei einem den Handbremshebel (1) mit dem Schlepphebel (4) koppelnden Mitnehmer (11) in der umgekehrten Bewegungsrichtung des Handbremshebels (1) eine durch eine zur Anlenkachse (7) der beiden Hebel (1 und 4) konzentrisch gekrümmte Langlochausnehmung (12) im Schlepphebel (4) gebildete Freigangeinrichtung zugeordnet ist.

5. Betätigungseinrichtung nach Anspruch 1 bis 4, dadurch gekennzeichnet, daß die dem Schlepphbel (4) zugeordnete Feststelleinrichtung durch eine gegen die Last einer Einrückfeder schwenkbar am Schlepphebel (4) gelagerte und mit einem an einem feststehenden Ausleger der an der Karosserie befestigten Tragkonsole (2) angeordneten, zur Anlenkachse (7) der beiden Hebel (1 und 4) konzentrischen Zahnsegment (6) zusammenwirkende, als Kipphebel ausgebildete Sperrklinke (5) gebildet und vermittels der innerhalb des Handbremshebels (1) längsverschieblich angeordneten Hilfsstange (22) auslösbar ist.

6. Betätigungseinrichtung nach Anspruch 1 bis 5, dadurch gekennzeichnet, daß die dem Handbremshebel (1) zugewandte Stirnseite (13) des Schlepphebels (4) einen zu seiner Anlenkachse (7) konzentrischen Konturverlauf aufweist und die als Kipphebel ausgebildete Sperrklinke (5) insgesamt innerhalb dieses Konturverlaufes angeordnet ist.

7. Betätigungseinrichtung nach Anspruch 1 bis 6, dadurch gekennzeichnet, daß dem freien Hebelarm (23) des die Sperrklinke (5) bildenden Kipphebels eine radial gerichtete Aussparung (24) im Konturverlauf der Stirnseite (13) des Schlepphebels (4) zugeordnet ist, derart, daß die Hilfsstange (22) nur im Bereich dieser Aussparung (24) mit dem freien Hebelarm (23) des insgesamt innerhalb der Kontur des Schlepphebels (4) angeordneten Kipphebels zusammenwirken kann und der untere Rand (25) der Aussparung (24) gleichzeitig auch einen mit der Hilfsstange (22) zusammenwirkenden Mitnehmeranschlag zur Koppelung des Schlepphebels (4) mit dem Handbremshebel (1) in der anderen Bewegungsrichtung bildet.

8. Betätigungseinrichtung nach Anspruch 1 bis 7, dadurch gekennzeichnet, daß die radial gerichtete Aussparung (24) im stirnseitigen Konturverlauf (13) des Schlepphebels (4) an dessen oberem Ende angeordnet ist.

9. Betätigungseinrichtung nach Anspruch 1 bis 8, dadurch gekennzeichnet, daß der Handbremshebel (1) und der Schlepphebel (4) jeweils ein im wesentlichen U-förmiges Querschnittsprofil aufweisen und einander übergreifend angeordnet sind, wobei der Schlepphebel (4) seinrseits die durch einen Flachmaterialzuschnitt gebildete an der Fahrzeugkaroserie feststehend befestigte Tragkonsole ( 2) umgreift.

10. Betätigungseinrichtung nach Anspruch 1 bis 9, dadurch gekennzeichnet, daß die Sperrklinke (5) samt einer ihr zugeordneten als Schenkelfeder ausgebildeten Einrückfeder (17) innerhalb des Profilquerschnittes des Schlepphebels (4) angeordnet und auf einem diesen durchsetzenden Zapfen (14) gelagert ist

11. Betätigungseinrichtung nach Anspruch 1 bis 10, dadurch gekennzeichnet, daß dem Kopf (27) des Lagerbolzens (14) für die Sperrklinke (5) eine zu dessen Anlenkachse (7) konzentrisch gekrümmte sickenförmige seitliche Erweiterung (28) der Anlenkbasis des Handbremshebels (1) zugeordnet ist.

12. Betätigungseinrichtung nach Anspruch 1 bis 11, dadurch gekennzeichnet, daß die im Handbremshebel (1) längsverschieblich angeordnete Hilfsstange (22) in an sich bekannter Weise mittels eines Betätigungsknopfes (19) entgegen einer Federlast (20) verstellbar ist und mit der stirnseitigen Aussparung (24) in der Kontur (13) des Schlepphebels (4) in Eingriff bringbar ist.
